# EUROPEAN PATENT APPLICATION

(11) **EP 4 539 473 A1**
(43) Date of publication of application: **16.04.2025**
(21) Application number: 23819265.2
(22) Date of filing: 09.06.2023
(51) Int. Cl.: H04N 21/422

(54) **VOICE CHAT DISPLAY METHOD AND APPARATUS, ELECTRONIC DEVICE, AND COMPUTER READABLE MEDIUM**

(30) Priority: 10.06.2022 CN 202210655650
(71) Applicant: Beijing Zitiao Network Technology Co., Ltd., Beijing 100190 (CN)
(72) Inventor: DONG, Shiwei, Beijing 100028 (CN); LIU, Yan, Beijing 100028 (CN)
(74) Representative: Dentons UK and Middle East LLP
(86) International application number: PCT/CN2023/099433
(87) International publication number: WO 2023/237102

(57) **Abstract**

The present application discloses a voice chat display method and apparatus, an electronic device, and a computer readable medium. The method comprises: for an electronic device used by a target user, when the electronic device determines that the target user joins a voice chat successfully, the electronic device determines that a live streaming voice chat display page can be displayed to the target user, such that the live streaming voice chat display page not only can display voice chat information of the target user and other voice chat personnel in a live streaming room, but also can provide some first voice chat state adjustment controls which can be directly operated for the target user, and therefore, the target user can quickly adjust the voice chat state thereof by performing simple operation on the voice chat state adjustment controls.

## Description

This application claims priority to Chinese Patent Application No. 202210655650.4, titled "METHOD AND APPARATUS FOR DISPLAYING INTERACTION, ELECTRONIC DEVICE AND COMPUTER READABLE MEDIUM", filed on June 10, 2022, with the China National Intellectual Property Administration, which is incorporated herein by reference in its entirety.

### FIELD

The present disclosure relates to the field of Internet technology, and in particular to a method and an apparatus for displaying interaction, an electronic device and a computer readable medium.

### BACKGROUND

Live stream is an information release approach for producing and releasing information synchronously with the occurrence and development of events on the spot, with a two-direction communication process.

In some scenarios, the host/streamer of the live stream room will invite some viewers to participate in real time interaction, so that other viewers in the live stream room can receive not only the audio data (and/or video data) from the streamer, but also the audio data (and/or video data) from the guests participating in the interaction. The guest participating in the interaction refers to the viewer who is conducting the interaction successfully with the streamer.

Since there are defects in some solutions of live stream interaction, these solutions of live stream interaction cannot meet the user requirements of the guests participating in interaction. As a result, the interaction experience of these guests participating in interaction is far from satisfaction.

### SUMMARY

In order to solve the above technical problem, the present disclosure provides a method and an apparatus for displaying interaction, an electronic device, and a computer readable medium.

To this end, the technical solutions provided in the embodiments of the present disclosure are as follows.

According to an embodiment of the present disclosure, a method for displaying interaction is provided, wherein the method is applied to an interaction terminal, the method includes:
displaying a live stream interaction display page to a target user; where the live stream interaction display page includes at least one first interaction state adjustment control; and
in response to a trigger operation of the target user for a target control in the at least one first interaction state adjustment control, adjusting the interaction state of the target user on the live stream interaction display page.

According to a possible embodiment, the at least one first interaction state adjustment control includes at least one of a first audio control and a first video control.

According to a possible embodiment, the target control is the first audio control;
the adjusting the interaction state of the target user on the live stream interaction display page, includes:
adjusting the first audio control from a first audio state to a second audio state on the live stream interaction display page, the first audio state is an audio enabled state, and the second audio state is an audio disabled state; or the second audio state is the audio enabled state, and the first audio state is the audio disabled state.

According to a possible embodiment, the target control is a first video control;
the adjusting the interaction state of the target user on the live stream interaction display page, includes:
adjusting the first video control from a first usage state to a second usage state on the live stream interaction display page, the first usage state is a video enabled state, and the second usage state is a video disabled state; or the second usage state is the video enabled state, and the first usage state is the video disabled state.

According to a possible embodiment, the live stream interaction display page includes a second interaction state adjustment control;
the method further includes:
in response to the trigger operation of the target user for the second interaction state adjustment control, displaying an interaction state management page to the target user;
receiving a configuration operation of the target user for at least one to-be-adjusted interaction state;
in response to an interaction state adjustment request triggered by the target user on the interaction state management page, adjusting the interaction state of the target user on the live stream interaction display page according to the configuration operation.

According to a possible embodiment, the interaction state management page includes at least one of a second audio control, a second video control, a third video control, an image processing control, and an effect configuration control.

According to a possible embodiment, the interaction state management page includes at least one to-be-used control; the at least one to-be-used control is used to control the at least one to-be-adjusted interaction state;
the receiving a configuration operation of the target user for at least one to-be-adjusted interaction state, includes:
receiving a trigger operation of the target user for the at least one to-be-used control;
the method further includes:
   in response to the trigger operation of the target user for the at least one to-be-used control, adjusting state description information of the at least one to-be-used control on the interaction state management page.

According to a possible embodiment, the method further includes:
in response to the trigger operation of the target user for the second interaction state adjustment control, controlling both the audio state and the video state of the target user to be in a disabled state.

According to a possible embodiment, the method further includes:
in response to a request of ending interaction, stopping displaying the at least one interaction state adjustment control on the live stream interaction display page.

According to a possible embodiment, the method further includes:
in response to the request of ending interaction, adjusting a display state of a commenting control on the live stream interaction display page.

According to a possible embodiment, the stopping displaying the at least one interaction state adjustment control on the live stream interaction display page, includes:
deleting at least one interaction state adjustment control from the live stream interaction display page according to a predetermined first dynamic effect pattern; and/or
the adjusting the display state of the commenting control, includes:
   adjusting a control display state of the commenting control from an icon display state to a text box display state on the live stream interaction display page according to a predetermined second dynamic effect pattern.

According to a possible embodiment, the live stream interaction display page further includes an interaction state display interface of the target user;
the method further includes:
in response to the trigger operation of the target user for the interaction state display interface, displaying the interaction state management page to the target user;
receiving a configuration operation of the target user for the at least one to-be-adjusted interaction state;
in response to the interaction state adjustment request triggered by the target user on the interaction state management page, adjusting the interaction state of the target user on the live stream interaction display page according to the configuration operation.

According to a possible embodiment, the at least one interaction state adjustment control is displayed in a predetermined area of the live stream interaction display page in a predetermined order.

According to the embodiment of the present disclosure, an apparatus for displaying interaction is provided, the apparatus includes:
a display unit, configured to display a live stream interaction display page to a target user, where the live stream interaction display page includes at least one first interaction state adjustment control; and
an adjustment unit, configured to adjust the interaction state of the target user on the live stream interaction display page in response to a trigger operation of the target user for a target control in the at least one first interaction state adjustment control.

According to the embodiment of the present disclosure, an electronic device is provided, where the electronic device includes a processor and a memory;
the memory is configured to storing instructions or computer programs;
the processor is configured to execute the instructions or computer programs in the memory, to cause the electronic device to implement the method for displaying interaction according to any one of the embodiments provided by the present disclosure.

According to the embodiment of the present disclosure, a computer readable medium is provided, wherein instructions or computer programs are stored in the computer readable medium, and when the instructions or computer programs are run on a device, the device is caused to implement the method for displaying interaction according to any one of the embodiments provided by the present disclosure.

According to the embodiment of the present disclosure, a computer program product is provided, the computer program product including a computer program carried on a non-transitory computer readable medium, the computer program containing program codes for executing any of the foregoing implementations of the method for displaying interaction.

### BRIEF DESCRIPTION OF THE DRAWINGS

In order to more clearly illustrate the technical solutions in the embodiments of the present disclosure or the conventional art, the accompanying drawings that need to be used in the description of the embodiments or the conventional art will be briefly introduced as follow. Obviously, the accompanying drawings in the following description are merely some embodiments described in the present disclosure. Those skilled in the art can also obtain other drawings according to these drawings without creative efforts.
Figure1 is a flow chart of a method for displaying interaction provided by an embodiment of the present disclosure;
Figure 2 is a schematic diagram of a live stream interaction display page provided by an embodiment of the present disclosure;
Figure 3 is a schematic diagram of another live stream interaction display page provided by an embodiment of the present disclosure;
Figure 4 is a schematic diagram of yet another live stream interaction display page provided by an embodiment of the present disclosure;
Figure 5 is a schematic diagram of an interaction state management page provided by an embodiment of the present disclosure;
Figure 6 is a schematic diagram of another interaction state management page provided by an embodiment of the present disclosure;

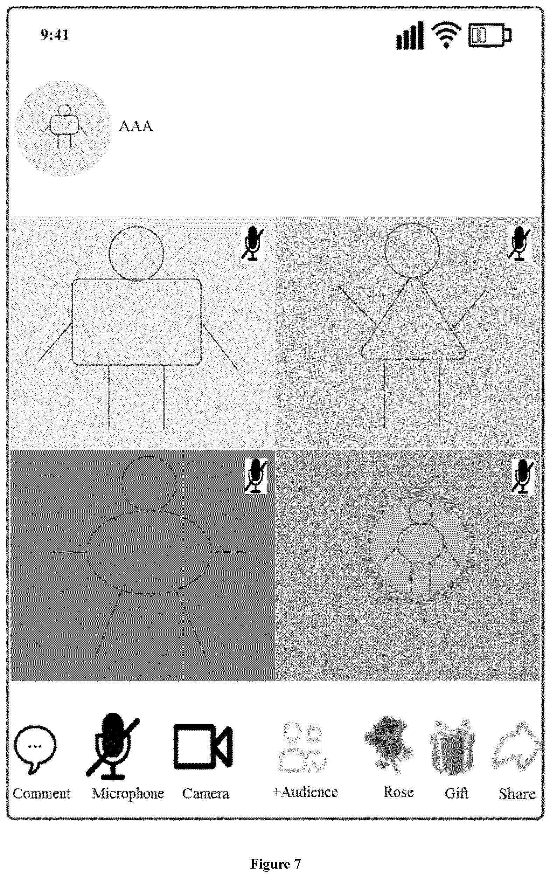

Figure 7 is a schematic diagram of a live stream room displaying page provided to another guest participating in interaction in a live stream room according to an embodiment of the present disclosure;
Figure 8 is a schematic diagram of another live stream interaction display page provided by an embodiment of the present disclosure;
Figure 9 is a schematic diagram of a live stream viewing page provided by an embodiment of the present disclosure;
Figure10 is a schematic diagram of another live stream viewing page provided by an embodiment of the present disclosure;
Figure 11 is a schematic diagram of yet another live stream interaction display page provided by an embodiment of the present disclosure;
Figure 12 is a schematic structural diagram of an apparatus for displaying interaction provided by an embodiment of the present disclosure; and
Figure 13 is a schematic structural diagram of an electronic device provided by an embodiment of the present disclosure.

### DETAILED DESCRIPTION OF EMBODIMENTS

The inventor found in research on the live stream interaction that, the guests participating in interaction in the live stream room have requirements different from those of ordinary viewers in the live stream room. For example, the guests participating in interaction often need to adjust their interaction state quickly (for example, quickly manage the on/off of their own cameras or microphone), while ordinary viewers do not have these needs.

The inventor also found that some live stream interaction solutions, failing to consider the differences in the user requirements of guests participating in interaction and ordinary viewers, usually provide the guests participating in interaction and ordinary viewers with substantially the same page operations (for example, both guests participating in interaction and ordinary viewers need to go through operations over multiple of pages to realize the on/off control of the camera or microphone). Hence, these live stream interaction solutions are inadequate to meet the special user requirements of guests participating in interaction (for example, to quickly adjust their own interaction state, etc.), resulting rather poor interaction experience for guests participating in interaction.

Based on the above findings, in order to solve the technical problems set forth in the background section, the embodiment of the present disclosure provides a method for displaying interaction. The method includes: for an electronic device (i.e., the interaction terminal) used by the target user, when the electronic device determines that the target user is successfully conducting an interaction, the electronic device determines that a live stream interaction display page can be displayed to the target user, so that the live stream interaction display page can not only display the interaction information of the target user and other interaction participators in the live stream room (for example, the interaction state of the target user and the interaction state of other interaction participators, etc.), but also provide the target user with some directly operable first interaction state adjustment control (for example, audio control and video control, etc.), whereby the target user can quickly adjust his own interaction state by performing simple operations (for example, clicking) on these interaction state adjustment controls, which can effectively meet the user requirements of the target user to quickly adjust interaction state (for example, mute the microphone, turn off the camera, etc.) during the interaction, so as to effectively improve the interaction experience of the target user.

In order to enable those skilled in the art to further understand the solution of the present disclosure, the technical solutions in the embodiments of the present disclosure will be clearly and completely described below in conjunction with the accompanying drawings in the embodiments of the present disclosure. Obviously, the described embodiments are merely a part of the embodiments of the present disclosure, not all the embodiments in the present disclosure. Based on the embodiments in the present disclosure, any other embodiments obtained by the skilled in the art without making creative efforts fall within the protection scope of the present disclosure.

In order to further understand the technical solutions provided by the present disclosure, the method for displaying interaction provided by the embodiments of the present disclosure will be described below with reference to some drawings.

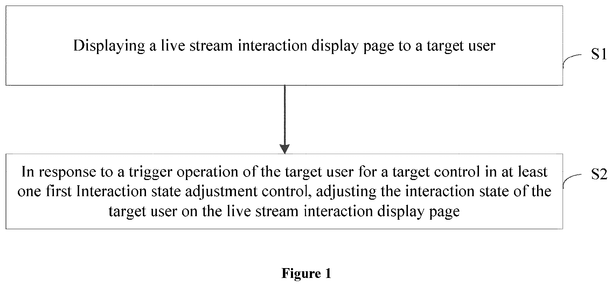

As shown in Figure 1, the embodiment of the present disclosure provides a method for displaying interaction, which is applied to an interaction terminal. The method includes S1-S2.

S1: displaying a live stream interaction display page to a target user.

The interaction terminal refers to the electronic device used by a person in the interaction state in the live stream room (for example, the streamer in the live stream room or a guest participating in interaction, etc.).

The target user refers to a user of the interaction terminal, such as a person who is using the interaction terminal; and this embodiment of the present disclosure does not limit the target user, for example, it may be a streamer in a live stream room or a certain guest participating in interaction. It should be noted that, in order to facilitate the understanding of the method for displaying interaction provided by the embodiment of the present disclosure, illustration is made below by taking the case where the target user is a guest on interaction as an example.

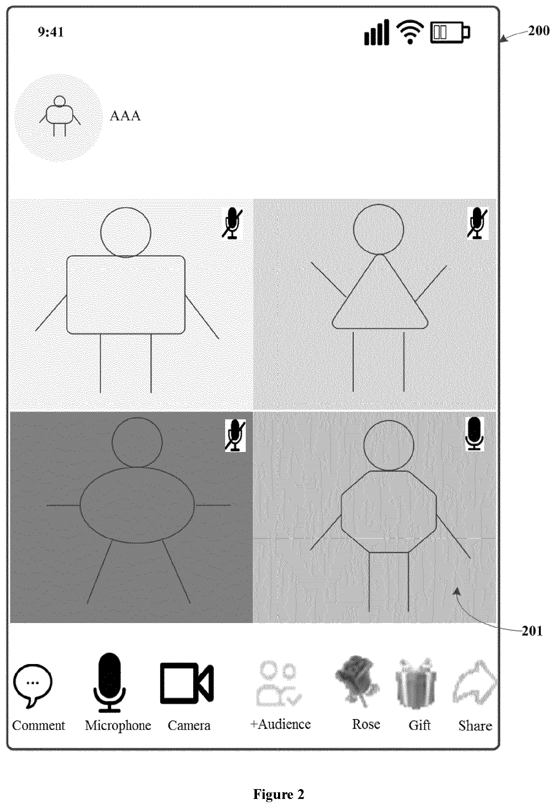

As an example, as shown in Figure 2, the target user may refer to the guest participating in interaction, who is displayed in the interaction state display interface 201 in Figure 2, so that the interaction state display interface 201 can display the interaction state of the target user in the live stream room (for example, to implement interaction by means of turning on the microphone and the camera).

In addition, the embodiment of the present disclosure does not limit the trigger condition of the step of "displaying a live stream interaction display page to a target user". For example, the trigger condition may specifically be: determining that the target user meets a condition for live stream interaction, where the condition for live stream interaction refers to the condition for a successful interaction of the target user.

In addition, this embodiment of the present disclosure does not limit the above-mentioned condition for live stream interaction. For example, the condition for live stream interaction may refer to the condition triggered by a successful interaction between ordinary viewers in a live stream room and the streamer of the live stream room (for example, the user shown in the upper left interface in Figure 2, etc.); and the embodiment of the present disclosure does not limit the condition for live stream interaction.

The live stream interaction display page refers to the live stream room page displayed on the electronic device (such as mobile phone and computer, etc.) used by the target user in the case that the target user becomes the guest participating in interaction, so that the live stream interaction display page may display the interaction information of the live stream room (for example, the interaction state of the target user, the interaction state of other guests participating in interaction, and the interaction state of the streamer, etc.) to the target user. For example, the live stream interaction display page may be the page 200 shown in Figure 2.

In addition, the live stream interaction display page can be used not only to display information of interaction between the target user and the streamer in the live stream room to the target user, but also can be used to provide the target user with some directly operable first interaction state adjustment control (e.g., an audio control, a video control and so on). For better understanding, illustration is made below in combination with examples.

As an example, when the live stream interaction display page is the page 200 shown in Figure 2, and the target user is the guest participating in interaction as shown in the interaction state display interface 201 in Figure 2, the live stream interaction display page can not only display the information of interaction between each guest participating in interaction and the streamer in the live stream room (for example, the guest participating in interaction shown in the upper right interface is in interaction with the streamer with camera on and microphone-off, the guest participating in interaction shown on the lower left interface is in interaction with the streamer with camera on and microphone-off, and the guest participating in interaction shown in the lower right interface is in interaction with the streamer with camera on and microphone on), moreover, there are multiple first interaction state adjustment controls (for example, microphone control and camera control, etc.) on the live stream interaction display page, so that the target user can adjust the interaction state (for example, whether to turn on the microphone, whether to turn on the camera, etc.) of the target user by means of these first interaction state adjustment controls. The microphone control is used to provide the target user with an audio state control function. The camera control is used to provide the target user with video display state function. It should be noted that "AAA" in Figure 2 refers to the nickname of the streamer in the live stream room (that is, the user shown on the upper left interface).

In addition, at least one first interaction state adjustment control is deployed on the live stream interaction display page; and the embodiment of the present disclosure does not limit these first interaction state adjustment controls. For example, the first interaction state adjustment controls may at least include at least one of the first audio control and the first video control. The first audio control refers to the control deployed on the live stream interaction display page for controlling the audio state function; and the embodiment of the present disclosure does not limit the first audio control, for example, it may be the microphone control shown in Figure 2. The first video control refers to the control deployed on the live stream interaction display page for controlling the video display state; and this embodiment of the present disclosure does not limit the first video control, for example, it may be the camera control shown in Figure 2. It is noted that in the disclosure the "video control" is also referred to as "camera control".

Also, this embodiment of the present disclosure does not limit the deployment positions of these first interaction state adjustment controls on the live stream interaction display page. For instance, all the first interaction state adjustment controls are displayed in a predetermined area (for example, the bottom operation area shown in Figure 2) of the live stream interaction display page in a predetermined order. The predetermined order may be configured in advance. The predetermined area may also be configured in advance.

Based on the relevant content of S1, it can be known that for an electronic device used by a target user (for example, a terminal device used by a guest participating in interaction), when the electronic device determines that the target user meets the condition for live stream interaction, the electronic device may determine that the role of the target user in the live stream room has been switched from an ordinary viewer to a guest participating in interaction, so the electronic device directly displays the live stream interaction display page to the target user. In this way, the live stream interaction display page can not only display the information of interaction between the target user and the streamer in the live stream room (for example, the interaction state of the target user, the interaction state of other guests participating in interaction, and the interaction state of the streamer, etc.), but also provide the target user with some directly operable first interaction state adjustment controls (for example, audio control, video control, etc.), so that the target user can not only view the interaction state of himself and other interaction participators in the live stream room on the electronic device, but also quickly adjust his own interaction state by means of these first interaction state adjustment controls, which is beneficial to meet the personalized interaction requirements of the target user.

S2: in response to a trigger operation of the target user for a target control in the at least one first interaction state adjustment control, adjusting the interaction state of the target user on the live stream interaction display page.

The target control refers to the first interaction state adjustment control selected by the target user. For example, in the case that the "at least one first interaction state adjustment control" includes the microphone control and the camera control shown in Figure 2, if the target user clicks the microphone control, then the target control is the microphone control; if the target user clicks the camera control, then the target control is the camera control.

In one embodiment, the interaction state includes but not limited to interaction audio state and interaction display state. The interaction audio state includes the audio state of the target user or the display state of the target control in the interaction. The audio state of the target user refers to the state such as whether the audio function is turned on, and the display state of the target control refers to the state such as the on pattern and off pattern of the target control. The interaction display state includes the video state of the target user or the display state of the target control in the interaction state. The video state of the target user refers to the state such as whether the video image is displayed, the display effect of the video image, and the display content of the video image.

In addition, this embodiment of the present disclosure does not limit the "trigger operation" in S2, for example, it may be a click operation.

In fact, different first interaction state adjustment controls may have different interaction state adjustment functions.

Based on this, the embodiment of the present disclosure further provides a possible implementation of S2, which may specifically be as: in response to the trigger operation of the target user for the target control in at least one first interaction state adjustment control, adjusting the interaction state of the target user on the live stream interaction display page according to interaction state adjustment rule corresponding to the target control.

The interaction state adjustment rule corresponding to the target control is used to describe the way to adjust the interaction state of the target user once the target control is triggered. For better understanding, illustration is made below in combination with two examples.

Example 1, if the target control is used to control the audio state of the target user (for example, the target control is the microphone control shown in Figure 2), the interaction state adjustment rule corresponding to the target control is specifically as follows. If the current display state of the target control is an enabled state, once the trigger operation performed by the target user on the target control is received, the current display state of the target control can be automatically switched to disabled state to suspend the audio play for the target user, so that others in the live stream room cannot hear what the target user is saying, while if the current display state of the target control is the disabled state, once the trigger operation performed by the target user on the target control is received, the current display state of the target control can be automatically switched to the enabled state to enable the audio play for the target user, so that others in the live stream room can hear what the target user is saying.

It can be seen that when the target control is a control for controlling the audio state of the target user (i.e., the target control is the first audio control), S2 may specifically be: in response to the trigger operation of the target user for the target control in the at least one first interaction state adjustment control, adjusting the audio state of the target user from the first audio state to the second audio state on the live stream interaction display page. The second audio state is opposite to the first audio state. For example, if the first audio state is an audio enabled state, then the second audio state is an audio disabled state, and if the first audio state is the audio disabled state, then the second audio state is the audio enabled state.

It should be noted that the audio enabled state refers to the state in which the real-time audio corresponding to the target user is played to others in the live stream room (for example, on the viewer terminals and other interaction terminals); the audio disabled state refers to the state in which the real-time audio corresponding to the target user is not played to others in the live stream room.

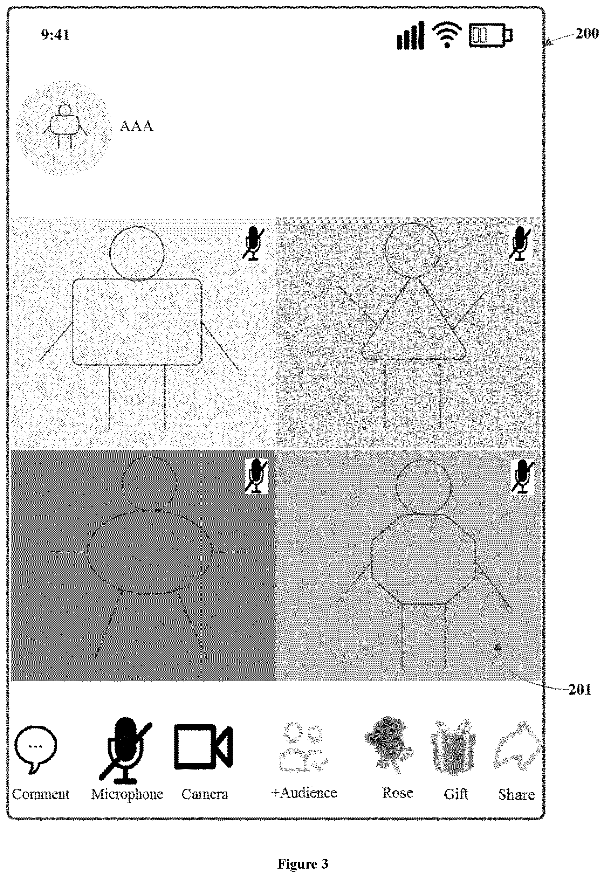

In addition, the embodiment of the present disclosure does not limit the display manner of the audio enabled state. For example, as shown in Figure 2, the audio enabled state may use be display by using the microphone icon shown at the bottom operation area and the microphone icon shown on the interaction state display interface 201 of the target user. In this way, everyone in the live stream room can know that the target user is in microphone-on state. Similarly, the embodiment of the present disclosure does not limit the display manner of the audio disabled state. For example, as shown in Figure 3, the audio disabled state may be displayed by using the microphone icon shown at the bottom operation area and the microphone icon shown on the interaction state display interface 201 of the target user. In this way, everyone in the live stream room can know that the target user is in microphone-off state.

Example 2, if the target control is used to control the video display state of the target user (for example, the target control is the camera control shown in Figure 2), the interaction state adjustment rule corresponding to the target control is specifically as follows. If the current display state of the target control is in the video enabled state, once receiving the trigger operation of the target user on the target control, the current display state of the target control can be automatically switched to the video disabled state to suspend the video display process for the target user, so that no one in the live stream room can see the real-time images of the target user; if the current display state of the target control is the video disabled state, once receiving the trigger operation of the target user on the target control, the current display state of the target control can be automatically switched to the video enabled state to start the video display process for the target user, so that everyone in the live stream room can see the real-time images of the target user.

It should be noted that in the video enabled state the real-time images corresponding to the target user are displayed to others in the live stream room (for example, on the viewer terminal and other interaction terminals); and in the video disabled state the real-time images corresponding to the target user are not displayed to others in the live stream room.

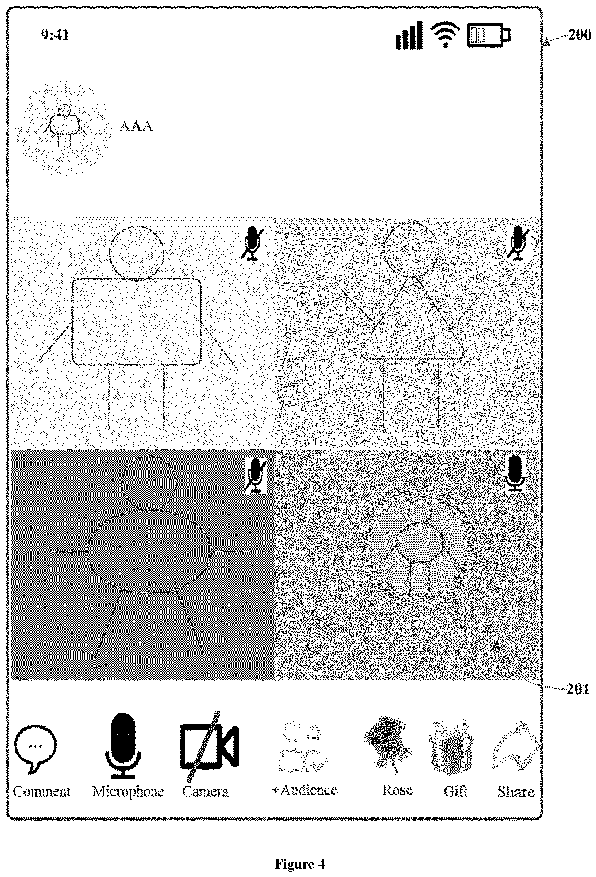

It can be seen that when the target control is a control for controlling the video display state of the target user, then S2 may specifically include: in response to the trigger operation of the target user for the target control in the at least one first interaction state adjustment control, adjusting the video display state of the target user from the first usage state to the second usage state on the live stream interaction display page. The second usage state is opposite to the first usage state. For example, if the first usage state is the video enabled state (for example, the icon of camera-enabled as shown in Figure 2), then the second usage state is the video disabled state (for example, the icon of camera-disabled as shown in Figure 4); while if the first usage state is the video disabled state, then the second usage state is the video enabled state.

In addition, the embodiment of the present disclosure does not limit the display manner of the video enabled state. For example, as shown in Figure 2, the video enabled state may be displayed by means of the following two approaches: the camera icon shown at the bottom operation area and the image information presented on the interaction state display interface 201 of the target user. In this way, everyone in the live stream room can know that the target user is in the camera-on state. Similarly, the embodiment of the present disclosure does not limit the display manner of the video disabled state. For example, as shown in Figure 4, the video disabled state may be displayed by means of the following two approaches: the camera icon shown at the bottom operation area and the image information (for example, only displaying the avatar of the target user) presented on the interaction state display interface 201 of the target user. In this way, everyone in the live stream room can know that the target user is in the camera-off state.

Based on the relevant content of S2, it can be seen that for the electronic device used by the target user, when the electronic device is displaying the live stream interaction display page to the target user, the target user may adjust the interaction state of the target user by using some first interaction state adjustment controls provided by the live stream interaction display page, so that the adjusted interaction state can meet the personalized requirements of the target user as much as possible. In this way, others in the live stream room (for example, the streamer, other guests participating in interaction and viewers, and the like) can see from their respective electronic devices that the live stream room is displaying the target user according to the interaction state that meets the personalized requirements of the target user. By doing so, the interaction requirement (for example, the requirement of not being on camera and not speaking in the live stream room, the requirement of being on camera but not speaking in the live stream room, the requirement of being on camera and speaking in the live stream room, or other personalized requirements) of target user can be met effectively.

Based on the relevant content of the S1 to S2, it can be known that for the method for displaying interaction provided in the embodiment of the present disclosure, when it is determined that the target user successfully participates in interaction, it can be determined that the role of the target user in the live stream room has been switched from an ordinary viewer to a guest participating in interaction. As a result, the live stream interaction display page that conforms to the role of the guest participating in interaction can be displayed to the target user, so that the live stream interaction display page can not only display the information of interaction between the target user and the streamer of the live stream room (for example, the interaction state of the target user, the interaction state of other guests participating in interaction, and the interaction state of the streamer, etc.), but also provide the target user with some directly operable first interaction state adjustment controls (for example, audio control, video control, etc.). Therefore, the target user can quickly adjust his or her interaction state by performing simple operations (for example, clicking) on these first interaction state adjustment controls, so that the user requirement that the target user can quickly adjust his or her own interaction state (for example, microphone-off, camera-off, etc.) can be met, which can effectively improve the interaction experience of the target user.

In fact, in some cases, the target user not only wants to switch on and off the camera or microphone, but also wants to configure functions of retouching or effects.

In order to meet the above requirements, the embodiment of the present disclosure further provides another possible implementation of the above-mentioned "live stream interaction display page". In this implementation, the live stream interaction display page can not only provide the target user with the first audio control and the first video control, but also provide the target user with an interaction state management control (for example, the +viewers control shown in Figure 2), so that the target user may use the interaction state management control to perform various interaction state adjustments. The interaction state management control is used to manage at least one to-be-adjusted interaction state of the target user (for example, audio state, video display state, retouching selection state, effect selection state, etc.). Among them, the audio state is used to indicate whether to perform audio play process for the target user; the video display state is used to indicate whether to perform video display process for the target user; the retouching selection state is used to indicate whether the target user has selected a certain retouching mode; the effect selection state is used to indicate whether the target user has selected an effect mode.

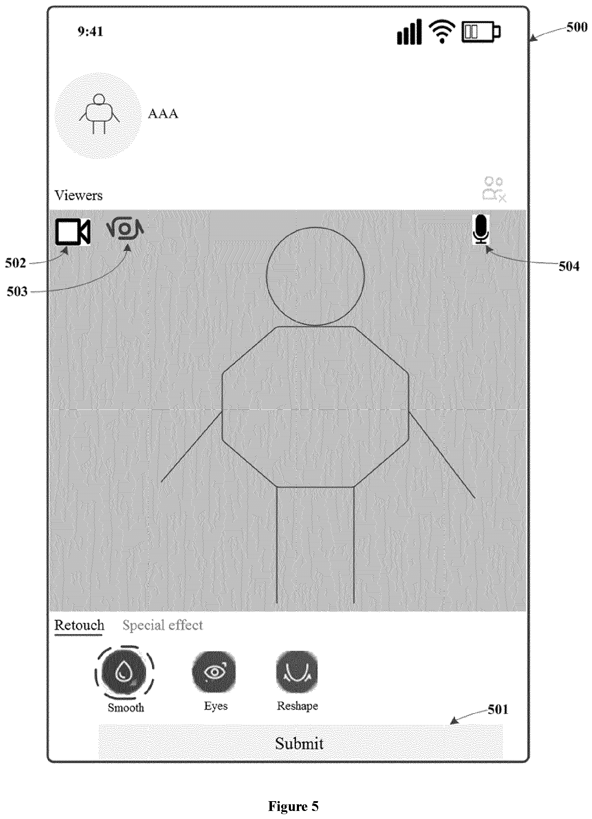

In addition, the interaction state management control is used to provide the target user with a relatively complete interaction state management function (for example, whether to turn on the microphone, whether to turn on the camera, what retouching method to use, and what effect to use, etc.) via the interaction state management page 500 shown in Figure 5.

Based on this, the embodiment of the present disclosure further provides another possible implementation of the method for displaying interaction. In this implementation, when the "live stream interaction display page" also includes a second interaction state adjustment control, the method for displaying interaction may further include step 1-step 2 in addition to the S1-S2.

Step 1: in response to the trigger operation of the target use on the second interaction state adjustment control, displaying the interaction state management page to the target user, and receiving a configuration operation of the target user for at least one to-be-adjusted interaction state.

The interaction state management page (also called the interaction state editing page) is used to generate interaction state description information of the target user according to the operational behavior of the target user (for example, turning off the camera, using a certain retouching mode, using a certain effect mode, and other information), so that the interaction state description information can represent the personalized requirements of the target user for at least one to-be-adjusted interaction state; the second interaction state adjustment control is used to trigger the display of the interaction state management page, to adjust the interaction state through interaction state management page.

In addition, the embodiment of the present disclosure does not limit the interaction state management page, for example, it may include at least one to-be-used control, so that the to-be-used control is used to control at least one to-be-adjusted interaction state. For better understanding, illustration is made below in combination with examples.

As an example, the interaction state management page may include at least one of a second audio control, a second video control, a third video control, an image processing control, and an effect configuration control.

The second audio control refers to the control deployed on the interaction state management page for controlling the audio state function; and this embodiment of the present disclosure does not limit the second audio control, for example, it may be the microphone control 504 shown in Figure 5.

The second video control refers to the control deployed on the interaction state management page for controlling the video display state; and this embodiment of the present disclosure does not limit the second video control, for example, it may be the camera control 502 shown in Figure 5.

The third video control refers to the control deployed on the interaction state management page for controlling the camera-capturing direction; and the embodiment of the present disclosure does not limit the third video control, for example, as shown in Figure 5, the third video control may be the camera-flip control 503 in Figure 5.

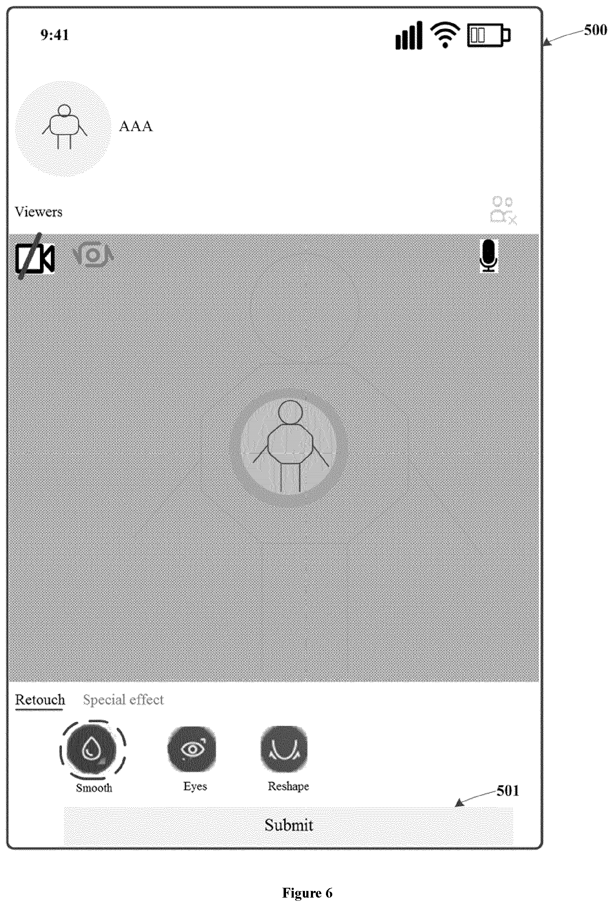

It should be noted that the display state of the third video control is determined based on the display state of the second video control, in the following way. If the current display state of the second video control is an enabled state, then the current display state of the third video control is a usable-state (the display state of the camera-flip control 503 as shown in Figure 5); if the current display state of the second video control is the disabled state, then the current display state of the third video control is a unusable-state (the display state of the camera-flip control as shown in Figure 6).

The image processing control refers to the control deployed on the interaction state management page to implement some retouching functions; and the embodiment of the present disclosure does not limit the image processing control, for example, it may be the retouching control shown in Figure 5. It should be noted that, for the retouching control in Figure 5, if the target user selects the smooth mode in an interface corresponding to the retouching control, the icon of the smooth mode will be circled with a dotted circle.

The effect configuration control refers to the control deployed on the interaction state management page to realize some effect functions; and the embodiment of the present disclosure does not limit the effect configuration control, for example, it may be the effect control shown in Figure 5.

In addition, the embodiment of the present disclosure does not limit the working principle of the interaction state management page. For example, in the case that the to-be-used control is deployed on the interaction state management page, the working principle of the interaction state management page may specifically be: receiving the trigger operation of the target user for at least one to-be-used control on the interaction state management page, and adjusting the state description information of the at least one to-be-used control on the interaction state management page (for example, it may be adjusted from the camera-on state as shown in Figure 5 to the camera-off state as shown in Figure 6) in response to the trigger operation of the target user for the at least one to-be-used control on the interaction state management page.

The to-be-used control refers to the control selected by the target user on the interaction state management page. For example, in the case that the interaction state management page is the page 500 shown in Figure 5, if the target user clicks on the camera control 502, then the to-be-used control is the camera control 502; if the target user clicks on the camera-flip control 503, then the to-be-used control is the camera-flip control 503; if the target user clicks on the microphone control 504, the to-be-used control is the microphone control 504; if the target user clicks on the retouching control, the to-be-used control is the retouching control; and so on.

In addition, the embodiment of the present disclosure does not limit the number of the to-be-used controls.

The state description information of the to-be-used control is used to describe the state information of the to-be-used control (for example, the display state on the interaction state management page, and the control state for a certain interaction state of the target user). For example, when the to-be-used control is the microphone control 504 as shown in Figure 5, the state description information of the to-be-used control may include the display state of the to-be-used control on the interaction state management page (i.e., being displayed as the microphone-on icon or displayed as the microphone-off icon) and the audio state of the target user corresponding to the to-be-used control.

In addition, this embodiment of the present disclosure does not limit the above-mentioned "the trigger operation for at least one to-be-used control on the interaction state management page", for example, it may be a click operation.

In addition, this embodiment of the present disclosure does not limit the generation of the above-mentioned "interaction state description information". For example, the "interaction state description information" may be generated as follows. After the target user triggers an interaction state adjustment request on the interaction state management page, the state description information of all state controls on the interaction state management page is summarized, to obtain the interaction state description information of the target user, so that the interaction state description information can represent the result of adjusting the at least one to-be-adjusted interaction state performed by the target user.

The interaction state adjustment request is used to request to save the result of adjusting the at least one to-be-adjusted interaction state performed by the target user on the interaction state management page; and the embodiment of the present disclosure does not limit the manner of triggering the interaction state adjustment request. For example, the interaction state adjustment request may be triggered by the target user clicking on a submit button 501 shown in Figure 5.

The i^{th} state control refers to a control deployed on the interaction state management page for adjusting the i^{th} to-be-adjusted interaction state, where i is a positive integer, i ≤ I, I is a positive integer representing the number of to-be-adjusted interaction states (i.e., the number of state controls).

Based on the relevant content of the step 1, it can be known that for the electronic device used by the target user, when the electronic device is displaying the live stream interaction display page to the target user, if the target user clicks on the interaction state management control (for example, the + viewer control shown in Figure 2) on the live stream interaction display page, the electronic device will directly display the interaction state management page (for example, the page 500 shown in Figure 5) associated with the interaction state management control to the target user, so that the target user can use at least one state control deployed on the interaction state management page to adjust one or more interaction states of the target user, which is beneficial to meet the personalized requirement of the target user in the interaction.

Step 2: in response to the interaction state adjustment request triggered by the target user on the interaction state management page, adjusting the interaction state of the target user on the live stream interaction display page according to the above configuration operation.

In this embodiment of the present disclosure, for the electronic device used by the target user, after the electronic device receives the interaction state adjustment request triggered by the user on the interaction state management page, the electronic device can determine that the target user has completed the configuration for at least one to-be-adjusted interaction state, so the electronic device can adjust the interaction state of the target user on the live stream interaction display page according to the configuration of the target user for the at least one to-be-adjusted interaction state. In this way, the interaction state of the target user conforms to the interaction state represented by the configuration operation, so that everyone in the live stream room can see the target user conducting interaction in the state represented by the configuration operation. Hence, the interaction state of the target user can be adjusted according to the personalized configuration of the target user for the interaction state.

Based on the relevant content of the steps 1 to 2, it can be known that for the electronic device used by the target user, when the electronic device is displaying the live stream interaction display page to the target user, if the target user clicks the interaction state management control (for example, the + viewers control shown in Figure 2) on the live stream interaction display page, then the electronic device will directly display the interaction state management page (for example, the page 500 shown in Figure 5) associated with the interaction state management control to the target user, so that the target user can use at least one state control deployed on the interaction state management page to adjust one or more interaction states of the target user; then, after receiving the interaction state adjustment request triggered by the user on the interaction state management page, the electronic device can directly adjust the interaction state of the target user on the live stream interaction display page according to the configuration operation of the target user for at least one to-be-adjusted interaction state. In this way, the interaction state of the target user can be adjusted according to the personalized configuration of the target user for the interaction state.

In fact, the target user may make multiple adjustments to some to-be-adjusted interaction states (for example, retouching selection state or effect selection state, etc.) on the interaction state management page, and the target user usually does not want to expose the attempted adjustments for the to-be-adjusted interaction states to others in the live stream room.

In order to meet the above requirement, the embodiment of the present disclosure further provides another possible implementation of the method for displaying interaction. In this implementation, when the "live stream interaction display page" also includes a second interaction state adjustment control, the method for displaying interaction may further include step 11-step 13 in addition to the S1-S2.

Step 11: in response to the trigger operation of the target user on the second interaction state adjustment control, displaying the interaction state management page to the target user, and controlling the audio state and video state of the target user to be in the disabled state.

The relevant content of the interaction state management page can be referred to step 1.

The "controlling the audio state and video state of the target user to be in the disabled state" refers to ensuring that no one in the live stream room except the target user can see the real-time audio and real-time images corresponding to the target user.

It should be noted that this embodiment of the present disclosure does not limit the timing for executing the action of "displaying the interaction state management page to the target user" in the step 11, and does not limit the order between the action of "displaying the interaction state management page to the target user" in the step 11 and the action of "controlling the audio state and video state of the target user to be in the disabled state" in the step 11, for example, the two actions can be executed at the same time.

In addition, this embodiment of the present disclosure does not limit the implementation of "controlling the audio state and video state of the target user to be in the disabled state", for example, it may specifically include: keeping the target user in the state of microphone-off and camera-off (i.e., turning off the audio and video on the interaction terminal of the target user), so as to avoid displaying real-time audio and video to other client terminals during the adjustment process of the target user.

Based on the relevant content of the step 11, it can be known that for the electronic device used by the target user, when the electronic device is displaying the live stream interaction display page to the target user, if the target user clicks the interaction state management control on the live stream interaction display page (for example, the +viewers control shown in Figure 2), the electronic device will not only display the interaction state management page associated with the interaction state management control to the target user, but also adjust the interaction state of the target user into the state of microphone-off and camera-off. By doing so, no one in the live stream room except the target user can access the speech content and video content of the target user, which can effectively prevent others in the live stream room from accessing the operation of the target user for the interaction state management page. In this way, it can effectively meet the requirement that the target user does not want the adjustments for some to-be-adjusted interaction states to be exposed to others, which is beneficial to improve the interaction experience of the target user.

Step 12: receiving the configuration operation of the target user on at least one to-be-adjusted interaction state.

It should be noted that the relevant content of step 12 can be referred to step 1.

Step 13: in response to the interaction state adjustment request triggered by the target user on the interaction state management page, adjusting the interaction state of the target user on the live stream interaction display page according to the configuration operation.

It should be noted that the relevant content of step 12 can be referred to the relevant content of the step 2.

Based on the relevant content of the steps 11 to 12, it can be known that, for the electronic device used by the target user, when the electronic device is displaying the live stream interaction display page to the target user, if the target user clicks interaction state management control on the live stream interaction display page, the electronic device will not only display the interaction state management page associated with the interaction state management control to the target user, but also adjust the interaction state of the target user into the state of microphone-off and camera-off. In this way, others in the live stream room will not be aware of the process how the target user uses the interaction state management page, so that the interaction experience of the target user can be effectively improved.

In fact, in order to further improve the interaction experience of the target user, the target user can open the interaction state management page in other manners (for example, directly clicking on the interaction state display interface 201 shown in Figure 2). Based on this, the embodiment of the present disclosure further provides another possible implementation of the method for displaying interaction. In this implementation, the "live stream interaction display page further includes" the interaction state display interface of the target user. The method for displaying interaction not only includes all or part of the above steps, may further include S3-S4.

S3: in response to the trigger operation of the target user for the interaction state display interface, displaying the interaction state management page to the target user, and receiving the configuration operation of target user for at least one to-be-adjusted interaction state.

The interaction state display interface of the target user is used to display the interaction state of the target user. For example, the interaction state display interface of the target user may be the interface 201 shown in Figure 2.

In addition, this embodiment of the present disclosure does not limit the "trigger operation of the target user for interaction state display interface", for example, it may be a click operation.

In addition, the relevant content of the "interaction state management page" in S3 can be referred to the content above.

Based on the relevant content of S3, it can be known that, for the electronic device used by the target user, when the electronic device is displaying the live stream interaction display page to the target user, if the target user clicks his or her own interaction state display interface (for example, the interface 201 shown in Figure 2) on the live stream interaction display page, then the electronic device will directly display the interaction state management page (for example, the page 500 shown in Figure 5) to the target user, so that the target user may use the at least one state control deployed on the interaction state management page to adjust one or more interaction states of the target user. In this way, the target user can open the interaction state management page in various ways, which is beneficial to improve the interaction experience of the target user.

S4: in response to the interaction state adjustment request triggered by the target user on the interaction state management page, adjusting the interaction state of the target user on the live stream interaction display page according to the configuration operation.

It should be noted that the relevant content of S4 can be referred to the relevant content of the step 2.

Based on the relevant content of the S3 to S4, it can be known that, for the electronic device used by the target user, when the electronic device is displaying the live stream interaction display page to the target user, if the target user clicks his or her own interaction state display interface on the live stream interaction display page, the electronic device will also directly display the interaction state management page (for example, the page 500 shown in Figure 5) to the target user, so that the target user can use the controls deployed for to-be-adjusted interaction states on the interaction state management page to adjust one or more interaction states of the target user; then, after receiving the interaction state adjustment request triggered by the user on the interaction state management page, the electronic device can directly adjust the interaction state(s) of the target user on the live stream interaction display page according to the configuration operation of the target user for the at least one to-be-adjusted interaction state. In this way, the interaction state of the target user can be adjusted according to the personalized configuration of the target user for the interaction state.

The embodiment of the present disclosure further provides another possible implementation of the method for displaying interaction. In this implementation, when the "at least one interaction state adjustment control" includes the first audio control, the method for displaying interaction not only includes some or all of the above steps (for example, S1-S2; or S1-S4, etc.), may also include S5:

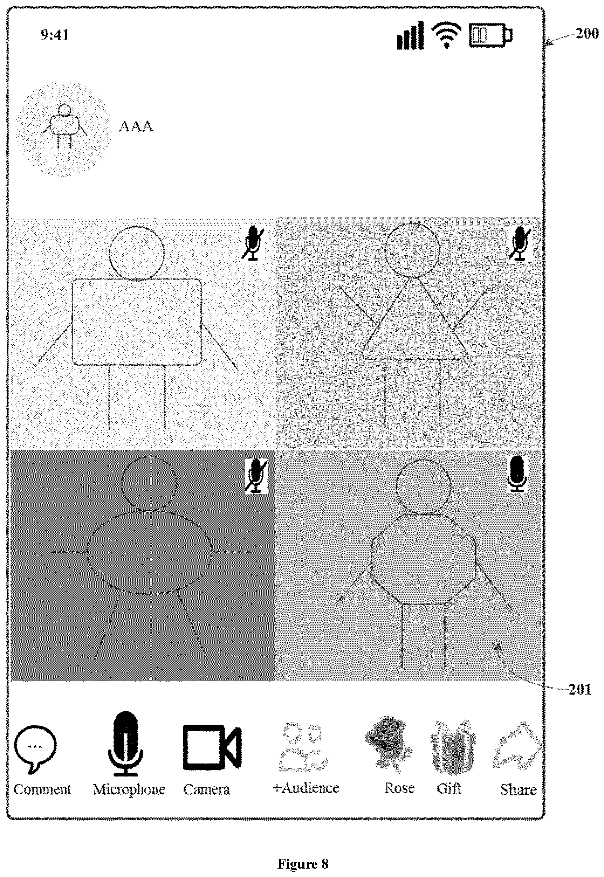

S5: when the first audio control is in audio-enabled state, receiving audio data of the target user, and adjusting the icon display state of the first audio control on the live stream interaction display page according to the audio data (for example, switching from the microphone icon shown in Figure 2 to the microphone icon shown in Figure 8), so that the icon display state can indicate that the audio data of the target user is being received.

In fact, as the live stream room display page seen by the guest participating in interaction is different from that seen by the ordinary viewer, for better adaption to this difference, the embodiment of the present disclosure further provides a possible implementation of S1, which may specifically be as follows. When it is determined that the target user meets the condition for live stream interaction, at least one first interaction state adjustment control is added on the live stream viewing page of the target user, to obtain the live stream interaction display page of the target user.

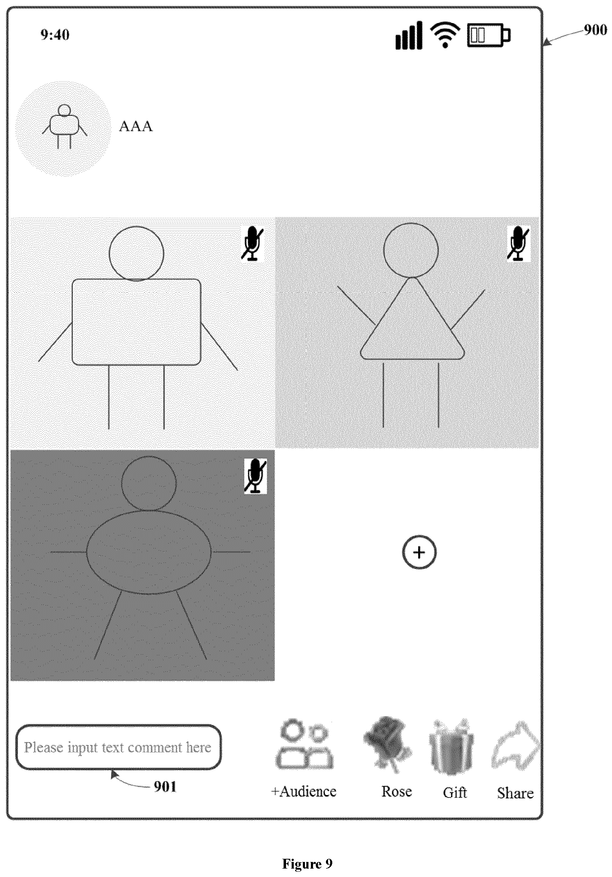

The live stream viewing page refers to the live stream room display page that the target user can see on his or her electronic device when watching the live stream as an ordinary viewer. For example, the live stream viewing page of the target user may be the page 900 shown in Figure 9. That is, when the target user watches the live stream as an ordinary viewer in the live stream room, the electronic device used by the target user can always display the live stream viewing page to the target user, so that the target user can implement some operation executable by ordinary viewers on the live stream viewing page (for example, triggering interaction request by clicking the +viewer control shown in Figure 9, achieving the purpose of quickly rewarding the streamer in the live stream room by clicking the rose control shown in Figure 9, achieving the purpose of selecting gifts and rewarding the streamer by clicking the gift control shown in Figure 9).

The first interaction state adjustment control refers to a control dedicated to meeting requirement of guests participating in interaction to adjust the interaction state; and the embodiment of the present disclosure does not limit the "at least one first interaction state adjustment control", for example, it may include at least one of the first audio control (for example, the microphone control shown in Figure 2) and the first video control (for example, the camera control shown in Figure 2).

In addition, this embodiment of the present disclosure does not limit the determination process of "at least one first interaction state adjustment control", for example, it may be determined in advance.

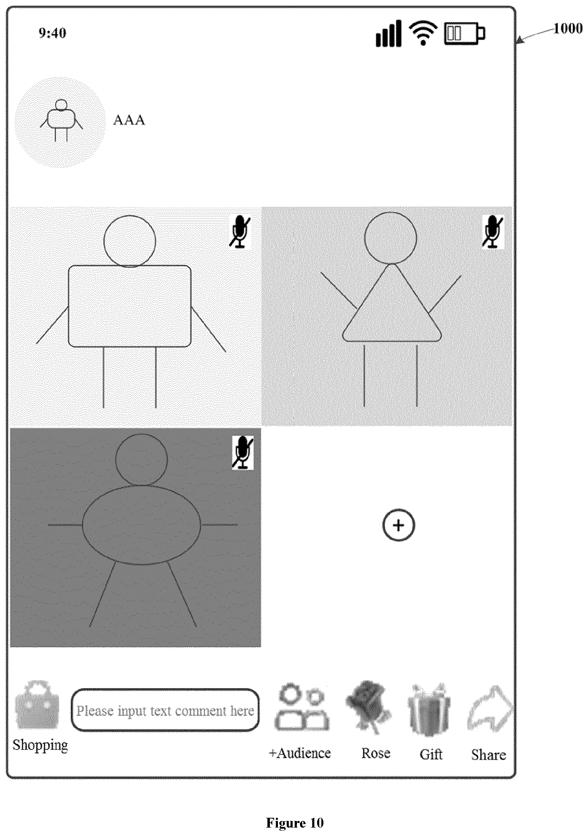

In fact, for better application to available space for deploying controls in different live stream rooms (for example, similar to a live stream room for talent show as in Figure 9, or similar to a live stream room for shopping as in Figure 10), the embodiment of the present disclosure further provides another possible implementation of the determination process of the "at least one first interaction state adjustment control", which may specifically include step 31-step 32:

step 31: determining the number of controls to be added according to the live stream viewing page of the target user, where the number of controls to be added indicates how many controls can be added to the live stream viewing page. The number of controls to be added is a positive integer.

As an example, step 31 may specifically include: first, determining the space available for deploying controls from the live stream viewing page of the target user, where the space available for deploying controls can represent the available free space that can be used to deploy new controls in the live stream viewing page (in particular, within a preset area of the live stream viewing page); then determining the number of controls to be added from the space available for deploying controls (for example, dividing the space available for deploying controls by the average occupied space per control, to obtain the number of controls to be added), so that there is a positive correlation between the number of controls to be added and the space available for deploying controls (that is, the larger the space available for deploying controls is, the greater the number of controls to be added is; the smaller the available space of the control is, the less the number of controls to be added is).

Step 32: According to the priority information of at least one candidate control, selecting, from the at least one candidate control, a quantity of the first interaction state adjustment controls, where the quantity is equal to the number of controls to be added.

The candidate control refers to a control available to be added to the live stream viewing page of the target user; and the candidate control can provide the target user with a function to adjust a certain type of interaction state. In addition, this embodiment of the present disclosure does not limit the "at least one candidate control", for example, it may include the first audio control (for example, the microphone control shown in Figure 2) and the first video control (for example, the camera control shown in Figure 2).

The priority information of the n^{th} candidate control is used to indicate the priority level of selecting the n^{th} candidate control; and the embodiment of the present disclosure does not limit the determination process of the priority information of the n^{th} candidate control. For example, the priority information of the n^{th} candidate control can be determined in advance. Alternatively, the priority information of the n^{th} candidate control may be determined according to the usage frequency of the control of being used by a large number of guests participating in interaction in the live stream room, so that the priority level of the n^{th} candidate control is positively correlated with the usage frequency of the n^{th} candidate control. In this case, n is a positive integer, n≤N, N is a positive integer, and N represents the number of candidate controls.

Based on the relevant content of the step 32, after obtaining the priority information of at least one candidate control, a quantity of the first interaction state adjustment controls can be selected from these candidate controls according to the priority information of these candidate controls, where the quantity is equal to the number of controls to be added, so that these first interaction state adjustment controls have higher priority than those of the unselected candidate controls. In this way, it is possible to add the controls used frequently by the guest participating in interaction to the live stream viewing page of the target user as much as possible.

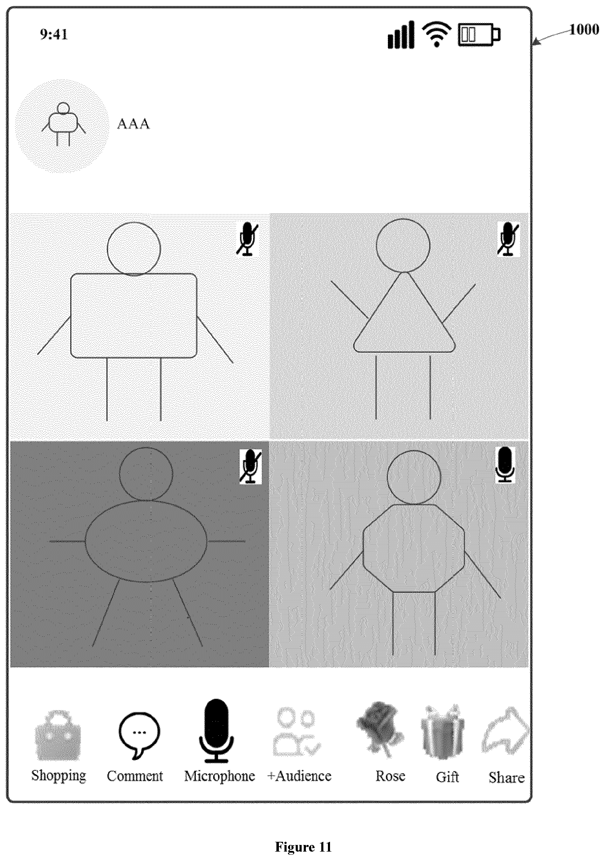

Based on the relevant content of the step 31 to step 32, it can be known that when it is determined that the target user meets the condition for live stream interaction, the number of controls to be added (for example, 1 or 2) may first be determined according to the space available for deploying controls on the live stream viewing page of the target user (for example, the page 900 shown in Figure 9 or the page 1000 shown in Figure 10); then the first interaction state adjustment controls (for example, a microphone control; or a microphone control and a camera control) , in a quantity equal to the number of controls to be added, can be selected from at least one candidate control according to the priority information of at least one candidate control, so that all these first interaction state adjustment controls can be added to the live stream viewing page of the target user subsequently, to obtain the live stream interaction display page (for example , the page 200 shown in Figure 2 or the page 1100 shown in Figure 11) the target user.

It should be noted that the embodiment of the present disclosure does not limit the device for executing the steps 31 to 32. For example, the device may be an electronic device used by the target user, or a server capable of data communication with the electronic device of the target user.

In addition, this embodiment of the present disclosure does not limit the process for adding the "at least one first interaction state adjustment control". For example, it may specifically be as: adding at least one first interaction state adjustment control on the live stream viewing page of the target user according to a predetermined third dynamic effect pattern, so that the target user can see, on his or her own electronic device, the process in which these first interaction state adjustment controls are dynamically added to the live stream viewing page according to the first dynamic effect pattern. By doing so, the transition from the live stream viewing page to the live stream interaction display page of the target user is smoother, and changes on the page are prominently prompted, which is beneficial to improve the interaction experience of the target user. The third dynamic effect pattern refers to a preset manner for dynamically presenting the process of adding at least one first interaction state adjustment control; and the embodiment of the present disclosure does not limit the third dynamic effect pattern, for example, it may be implemented as an animation manner.

Based on the relevant content of a possible implementation of S1, it can be known that for the electronic device used by the target user, when the target user is watching the live stream as an ordinary viewer in the live stream room, the electronic device will display the live stream viewing page to the target user so that the target user can watch the live stream from the perspective of an ordinary viewer; once electronic device determines that the target user meets the condition for live stream interaction, the electronic device can determine that the role of the target user in the live stream room is switched from ordinary viewer to a guest participating in interaction. For better adaption to the new role of the target user, the electronic device can directly and dynamically add at least one first interaction state adjustment control on the live stream viewing page which the target user is watching, so that the target user can continue to watch the live stream from the perspective of a guest participating in interaction, so as to achieve a smooth switch from the live stream viewing page to the live stream interaction display page of the target user. In this way, it can not only effectively avoid the user discomfort caused by directly switching between the pages, but also can prominently prompt the changes on the pages, which is beneficial to improve the interaction experience of the target user.

Based on the process of adding "at least one first interaction state adjustment control" as described above, once the interaction of target user is ended, these first interaction state adjustment controls can be automatically deleted from live stream interaction display page of the target user, to restore the live stream page seen by the target user as an ordinary viewer. Based on this, the embodiment of the present disclosure further provides another possible implementation of the method for displaying interaction. In this implementation, the method for displaying interaction may include step 3 in addition to parts or all of the above steps:

Step 3: in response to a request of ending interaction, stopping displaying the at least one first interaction state adjustment control on the live stream interaction display page.

The request of ending interaction is used for requesting to end the interaction state of the target user in the live stream room.

In addition, this embodiment of the present disclosure does not limit the implementation of "stopping displaying the at least one first interaction state adjustment control on the live stream interaction display page". For example, it may specifically be as: deleting the at least one first interaction state adjustment control from the live stream interaction display page according to a preset first dynamic effect pattern. The first dynamic effect pattern is an inverse process of the third first dynamic effect pattern.

In fact, since guests participating in interaction usually communicate with others in the live stream room directly through audio rather than inputting text comments, the control for inputting text comments (for example, the control 901 as shown in Figure 9) is not frequently used by guests participating in interaction. Furthermore, control for inputting text comments usually takes up a rather large space, causing waste of space.

Based on this, the embodiment of the present disclosure further provides another possible implementation of S1. In this implementation, when a commenting control for inputting text comments is deployed on the "live stream viewing page of the target user", S1 may specifically include: when it is determined that the target user meets the condition for live stream interaction, adding at least one to-be-added control and adjusting the control display state of the commenting control from a text box display state to an icon display state on the live stream viewing page of the target user, to obtain the live stream interaction display page of the target user.

The commenting control refers to the control deployed on the live stream viewing page of the target user for inputting text comments. For example, when the live stream viewing page of the target user is the page 900 shown in Figure 9, the commenting control is the control 901 shown in Figure 9.

The text box display state describes the display state of the control deployed on the live stream viewing page of the target user for inputting text comments. For example, when the live stream viewing page of the target user is the page 900 shown in Figure 9, and the commenting control is the control 901 shown in Figure 9, the text box display state may be the display state of the control 901 shown in Figure (i.e., displayed in the form of a text box for receiving input).

The icon display state is used to describe the display state of the control deployed on the live stream interaction display page of the target user for inputting text comments. For example, when the live stream interaction display page of the target user is the page 200 shown in Figure 2, the icon display state may be the display state of the commenting control shown in Figure 2 (i.e., displayed in the form of an icon).

In addition, this embodiment of the present disclosure does not limit the implementation of the "adjusting the control display state of the commenting control from the text box display state to the icon display state". For example, it may specifically include: adjusting the control display state of the commenting control from the text box display state to the icon display state on the live stream viewing page of the target user according to a predetermined second dynamic effect pattern, so that the target user can see the dynamic changing process of the control display state of the commenting control on his or her own electronic device. In this way, the transition from the live stream viewing page to the live stream interaction display page of the target user is smoother, and changes on the page are prominently prompted, thereby improving the interaction experience of the target user. The second dynamic effect pattern refers to the preset manner for dynamically presenting the change process of the control display state of the commenting control; and the embodiment of the present disclosure does not limit the second dynamic effect pattern, for example, it may be implemented by means of animation.

Based on the relevant content of another possible implementation of S1, it can be known that for the electronic device used by the target user, when the target user is watching the live stream as an ordinary viewer in the live stream room, the electronic device will display the live stream viewing page to the target user so that the target user can watch the live stream from the perspective of an ordinary viewer; once the electronic device determines that the target user meets the condition for live stream interaction, the electronic device can determine that the role of the target user in the live stream room is switched from ordinary viewer to a guest participating in interaction. For better adaption to the new role of the target user, the electronic device can not only add at least one to-be-added control on the live stream viewing page which the target user is watching, but also adjust the control display state of the original commenting control from the text box display state to the icon display state on the live stream viewing page, so that the target user can continue to watch the live stream from the perspective of a guest participating in interaction, so as to achieve a smooth switch from the live stream viewing page to the live stream interaction display page of the target user. In this way, it can not only effectively avoid the user discomfort caused by directly switching the pages, but also can prominently prompt the changes on the pages, which is beneficial to improve the interaction experience of the target user.

Based on the adjustment process of the "commenting control", it can be known that, when the interaction of the target user is ended, the commenting control can be automatically adjusted to restore the live stream page seen by the target user as an ordinary viewer. Based on this, the embodiment of the present disclosure further provides another possible implementation of the method for displaying interaction. In this implementation, the method for displaying interaction may further include step 4 in addition to parts or all of the above steps:

Step 3: in response to the request of ending interaction, adjusting the display state of the commenting control on the live stream interaction display page.

It should be noted that this embodiment of the present disclosure does not limit the implementation of "adjusting the display state of the commenting control on the live stream interaction display page", for example, it may specifically include: adjusting the control display state of the comment inputting control from the icon display state to the text box display state on the live stream interaction display page according to a preset second dynamic effect pattern. The second dynamic effect pattern is the inverse process of the third dynamic effect pattern.

In fact, the interaction requirements of guests participating in interaction are different from those of ordinary viewers. For example, ordinary viewers usually have the requirement of initiating a request for interaction with the streamer, while the guests participating in interaction, usually without such requirement, have the requirement of quickly adjusting their own interaction state.

Based on the above user requirements, it can be seen that viewers in different roles in the live stream room have different interaction requirements. Therefore, in order to save controls as much as possible, the "interaction state management control" can be used to meet the interaction requirements of viewers in different roles in the live stream room separately.

Based on this, the embodiment of the present disclosure further provides another possible implementation of S1. In this implementation, when the "the live stream viewing page of the target user" is deployed with a commenting control for inputting text comments, and the interaction state management control for meeting the interaction requirements of the user, S1 can specifically include: when it is determined that the target user meets the condition for live stream interaction, adding at least one first interaction state adjustment control on the live stream viewing page of the target user, adjusting the control display state of the commenting control from the first display state to the second display state, and adjusting the control display state of the interaction state management control from the third display state to the fourth display state on the live stream viewing page of the target user, so as to obtain the live stream interaction display page of the target user.

The interaction state management control is used to meet the interaction requirements of the target user. For example, when the target user is an ordinary viewer, the interaction state management control is used to meet the requirement of the target user to initiate an interaction request to the streamer, however, when the target user is a guest participating in interaction, the interaction state management control is used to meet the requirement of the target user to quickly adjust his or her own interaction state.

The third display state is used to describe the display state for presenting the interaction state management control deployed on the live stream viewing page of the target user. For example, when the live stream viewing page of the target user is the page 900 shown in Figure 9, and the interaction state management control is the +viewers control shown in Figure 9, the third display state may be the display state of the +viewers control shown in Figure 9 (i.e., displayed in the form of two complete people).

The fourth display state is used to describe the display state for presenting the interaction state management control deployed on the live stream interaction display page of the target user. For example, when the live stream interaction display page of the target user is the page 200 shown in Figure 2, the fourth display state may be the display state of the + viewers control shown in Figure 2 (i.e., displayed in the form of one complete people, an incomplete people, and a tick).

In addition, this embodiment of the present disclosure does not limit the implementation of the "adjusting the control display state of the interaction state management control from the third display state to the fourth display state". For example, it may specifically be: adjusting the control display state of the interaction state management control from the third display state to the fourth display state on the live stream viewing page of the target user, so that the target user can see the dynamic change process of the control display state of the interaction state management control on his or her own electronic device. By doing so, the transition from the live stream viewing page to the live stream interaction display page of the target user is smoother, and changes on the page are prominently prompted, which is beneficial to improve the interaction experience of the target user. The third dynamic effect pattern refers to a preset manner for dynamically presenting the change process of the control display state of the interaction state management control; and the embodiment of the present disclosure does not limit the third dynamic effect pattern, for example, it may be implemented in animation manner.

Based on the relevant content of another possible implementation of S1, it can be known that for the electronic device used by the target user, when the target user is watching the live stream as an ordinary viewer in the live stream room, the electronic device will display the live stream viewing page to the target user so that the target user can watch the live stream from the perspective of an ordinary viewer; once the electronic device determines that the target user meets the condition for live stream interaction, the electronic device can determine that the role of the target user in the live stream room is switched from ordinary viewer to a guest participating in interaction. For better adaption to the new role of the target user, the electronic device can not only add at least one first interaction state adjustment control on the live stream viewing page that the target user is watching, but also adjust the control display state of the already-present commenting control from the first display state to the second display state on the live stream viewing page, and additionally adjust the control display state of the interaction state management control from the third display state to the fourth display state. In this way, the target user can continue to watch the live stream from the perspective of a guest participating in interaction, so as to achieve a smooth switch from the live stream viewing page to the live stream interaction display page of the target user. Hence, it can not only effectively avoid the user discomfort caused by directly switching the pages, but also can prominently prompt the changes on the pages, which is beneficial to improve the interaction experience of the target user.

Based on the relevant content of the method for displaying interaction, an embodiment of the present disclosure further provides an apparatus for displaying interaction, which will be explained and described below in conjunction with the accompanying drawings. In addition, the technical details of the apparatus for displaying interaction provided in the embodiment of the present disclosure can be referred to the relevant content of the method for displaying interaction.

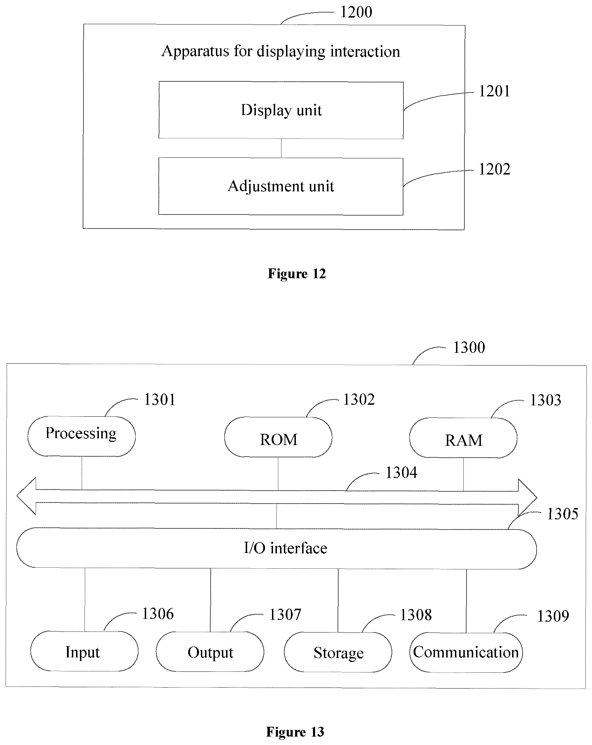

Referring to Figure 12, Figure 12 is a schematic structural diagram of an apparatus for displaying interaction provided by an embodiment of the present disclosure.

According to the embodiment of the present disclosure, an apparatus 1200 for displaying interaction is provided, the apparatus includes:
a display unit 1201, configured to display a live stream interaction display page to a target user; where the live stream interaction display page includes at least one first interaction state adjustment control; and
an adjustment unit 1202, configured to adjust the interaction state of the target user on the live stream interaction display page in response to a trigger operation of the target user for a target control in the at least one first interaction state adjustment control.

According to a possible embodiment, the at least one first interaction state adjustment control includes at least one of a first audio control and a first video control.

According to a possible embodiment, the target control is the first audio control;
the adjustment unit 1202 is specifically configured to adjust the first audio control from a first audio state to a second audio state on the live stream interaction display page, the first audio state is an audio enabled state, and the second audio state is an audio disabled state; or the second audio state is the audio enabled state, and the first audio state is the audio disabled state.

According to a possible embodiment, the target control is a first video control;
the adjustment unit 1202 is specifically configured to adjust the first video control from a first usage state to a second usage state on the live stream interaction display page, the first usage state is a video enabled state, and the second usage state is a video disabled state; or the second usage state is the video enabled state, and the first usage state is the video disabled state.

According to a possible embodiment, the live stream interaction display page includes a second interaction state adjustment control;
the apparatus 1200 for displaying interaction further includes:
an edit unit, specifically configured to: display an interaction state management page to the target user in response to the trigger operation of the target user for the second interaction state adjustment control; receive a configuration operation of the target user for at least one to-be-adjusted interaction state; and adjust the interaction state of the target user on the live stream interaction display page according to the configuration operation in response to an interaction state adjustment request triggered by the target user on the interaction state management page.

According to a possible embodiment, the interaction state management page includes at least one of a second audio control, a second video control, a third video control, an image processing control, and an effect configuration control.

According to a possible embodiment, the interaction state management page includes at least one to-be-used control; the at least one to-be-used control is used to control the at least one to-be-adjusted interaction state;
the edit unit is specifically configured to receive a trigger operation of the target user for the at least one to-be-used control;
the edit unit is further configured to adjust state description information of the at least one to-be-used control on the interaction state management page in response to the trigger operation of the target user for the at least one to-be-used control.

According to a possible embodiment, the apparatus 1200 for displaying interaction further includes:
a control unit, configured to control both the audio state and the video state of the target user to be in a disabled state in response to the trigger operation of the target user for the second interaction state adjustment control.

According to a possible embodiment, the at least one interaction state adjustment control includes the first audio control;
the apparatus 1200 for displaying interaction further includes:
an acquiring unit, configured to, in the case of the first audio control is in audio enabled state, receive the audio data of the target user and adjust an icon display state of the first audio control on the live stream interaction display page according to the audio data, so that the icon display state is used to indicate the audio data of the target user is being received.

According to a possible embodiment, the apparatus 1200 for displaying interaction further includes:
a displaying unit, configured to stop displaying the at least one interaction state adjustment control on the live stream interaction display page in response to a request of ending interaction.

According to a possible embodiment, the apparatus 1200 for displaying interaction further includes:
a converting unit, configured to adjust a display state of a commenting control on the live stream interaction display page in response to the request of ending interaction.

According to a possible embodiment, the displaying unit is specifically configured to delete at least one interaction state adjustment control from the live stream interaction display page according to a predetermined first dynamic effect pattern.

According to a possible embodiment, the converting unit is specifically configured to adjust a control display state of the commenting control from an icon display state to a text box display state on the live stream interaction display page according to a predetermined second dynamic effect pattern.

According to a possible embodiment, the live stream interaction display page further includes an interaction state display interface of the target user;
the apparatus 1200 for displaying interaction further includes:
a feedback unit, configured to: display the interaction state management page to the target user in response to the trigger operation of the target user for the interaction state display interface; receive a configuration operation of the target user for the at least one to-be-adjusted interaction state; and adjust the interaction state of the target user on the live stream interaction display page according to the configuration operation in response to the interaction state adjustment request triggered by the target user on the interaction state management page.

According to a possible embodiment, the at least one interaction state adjustment control is displayed in a predetermined area of the live stream interaction display page in a predetermined order.

Based on the relevant content of the apparatus 1200 for displaying interaction, it can be known that for the apparatus 1200 for displaying interaction provided in the embodiment of the present disclosure, when the apparatus 1200 for displaying interaction determines that the target user successfully participates in interaction, the apparatus 1200 for displaying interaction may determine to display a live stream interaction display page to the target user, so that the live stream interaction display page can not only display interaction information of the target user and other interaction participators in the live stream room (for example, the interaction state of the target user, the interaction state of other guests participating in interaction, and the interaction state of the streamer, etc.), but also provide the target user with some directly operable interaction state adjustment controls (for example, microphone control and camera control, etc.). In this way, the target user can quickly adjust his or her own interaction state through simple operations (e.g., a click operation) on these interaction state adjustment controls, so that the user requirements of the target user to quickly adjust his or her interaction state (for example, microphone-off, camera-off, etc.) during the interaction can be met effectively, thereby improving the interaction experience of the target user effectively.

In addition, the embodiment of the present disclosure further provides an electronic device, the electronic device includes a processor and a memory; the memory is configured to storing instructions or computer programs; the processor is configured to execute the instructions or computer programs in the memory to cause the electronic device to implement the method for displaying interaction according to any one of the embodiments provided by the present disclosure.

Figure 13 shows a schematic structural diagram of an electronic device 1300, which is applicable for implementing an embodiment of the present disclosure. The terminal devices in the embodiments of the present disclosure may include, but not limited to, mobile phones, notebook computers, digital broadcast receivers, PDA (personal digital assistants), PAD (tablet computers), PMP (portable multimedia players), vehicle-mounted terminals (such as vehicle-mounted navigation terminals) and other mobile terminals, and fixed terminals such as digital TVs, desktop computers, and the like. The electronic device shown in Figure 13 is merely an example and should not limit the functions and application scope of the embodiments of the present disclosure.

As shown in Figure 13, the electronic device 1300 may include a processing apparatus (such as a central processing unit, a graphics processing unit, etc.) 1301, which may execute various appropriate actions and processes based on programs stored in a read only memory (ROM) 1302 or programs loaded from storage apparatus 1308 to the random-access memory (RAM) 1303. In the RAM 1303, various programs and data necessary for the operation of the electronic device 1300 are also stored. The processing apparatus 1301, ROM 1302, and RAM 1303 are connected to each other through a bus 1304. An input/output (I/O) interface 1305 is also connected to bus 1304.

Typically, the following devices can be connected to the I/O interface 1305: an input apparatus 1306 including, for example, a touch screen, touchpad, keyboard, mouse, camera, microphone, accelerometer, gyroscope, etc.; an output apparatus 1307, including, for example, a liquid crystal display (LCD), speaker, vibrator; a storage apparatus 1308 including, for example, a magnetic tape, a hard disk, etc.; and a communication apparatus 1309. The communication apparatus 1309 may allow the electronic device 1300 to perform wireless or wired communication with other devices to exchange data. Although Figure 13 shows electronic device 1300 having various means, it should be understood that it is unnecessary to implement or have all of the means shown here. More or fewer means may alternatively be implemented or provided.

In particular, according to an embodiment of the present disclosure, the processes described above with reference to the flowcharts can be implemented as computer software programs. For example, embodiments of the present disclosure include a computer program product, which includes a computer program carried on a non-transitory computer readable medium, where the computer program includes program code for executing the method shown in the flowchart. In such an embodiment, the computer program may be downloaded and installed from a network via communication apparatus 1309, or be installed from storage apparatus 1308, or be installed from ROM 1302. When the computer program is executed by the processing apparatus 1301, the above-mentioned functions defined in the methods of the embodiments of the present disclosure are implemented.

The electronic device provided by the embodiment of the present disclosure pertains to the same inventive concept as the method provided by the above embodiment. And the technical details that do not described in detail in this embodiment can be referred to the above embodiment, and this embodiment has the same beneficial effect as the above embodiments.

The embodiment of the present disclosure further provides a computer readable medium, the computer readable medium stores instructions or computer programs, and when the instructions or computer programs are run on the device, the device is made to implement the method for displaying interaction according to any one of the embodiments provided by the present disclosure.

It should be noted that the above-mentioned computer readable medium in the present disclosure may be a computer readable signal medium or a computer readable storage medium or any combination of the two. A computer readable storage medium may be, for example, but not limited to, an electrical, magnetic, optical, electromagnetic, infrared, or semiconductor system, apparatus, or device, or any combination thereof. More specific examples of computer readable storage media may include, but are not limited to, electrical connections with one or more wires, portable computer disks, hard disks, random access memory (RAM), read only memory (ROM), erasable programmable read only memory (EPROM or flash memory), optical fiber, portable compact disk read only memory (CD-ROM), optical storage device, magnetic storage device, or any suitable combination thereof. In the present disclosure, a computer readable storage medium may be any tangible medium that contains or stores a program that can be used by or in conjunction with an instruction execution system, apparatus, or device. In the present disclosure, however, a computer readable signal medium may include a data signal propagated in baseband or as part of a carrier wave carrying computer readable program code therein. Such propagated data signals may take many forms, including but not limited to electromagnetic signals, optical signals, or any suitable combination of the foregoing. A computer readable signal medium may also be any computer readable medium other than a computer readable storage medium, which can transmit, propagate, or transmit a program for use by or in conjunction with an instruction execution system, apparatus, or device. Program code embodied on a computer readable medium may be transmitted by any appropriate medium, including but not limited to wires, optical cables, RF (radio frequency) and so on, or any suitable combination thereof.

In some embodiments, the client terminal and the server can communicate using any currently known or future-developed network protocols such as HTTP (Hyper Text Transfer Protocol), and can communicate with any form or medium of digital data communication (e.g., communication network) interconnections. Examples of communication networks include local area networks ("LANs"), wide area networks ("WANs"), internetworks (e.g., the Internet), and peer-to-peer networks (e.g., ad hoc peer-to-peer networks), as well as any currently known or future-developed network.

The above-mentioned computer readable medium may be included in the above-mentioned electronic device, or may exist independently without being incorporated into the electronic device.

The above-mentioned computer readable medium carries one or more programs, and when the above-mentioned one or more programs are executed by the electronic device, the electronic device can implement the above-mentioned method.

Computer program code for carrying out operations of the present disclosure may be written in one or more programming languages, or combinations thereof, including but not limited to object-oriented programming languages, such as Java, Smalltalk, C++, and Including conventional procedural programming languages, such as the "C" language or similar programming languages. The program code may execute entirely on the user's computer, partly on the user's computer, as a stand-alone software package, partly on the user's computer and partly on a remote computer or entirely on the remote computer or server. In cases involving a remote computer, the remote computer can be connected to the user computer through any kind of network, including a local area network (LAN) or a wide area network (WAN), or it can be connected to an external computer (such as connected by Internet via an Internet service provider).

The flowchart and block diagrams in the Figures illustrate the architecture, function, and operation of possible implementations of systems, methods, and computer program products according to various embodiments of the present disclosure. In this regard, each block in a flowchart or block diagram may represent a module, program segment, or portion of code that contains one or more logical functions for implementing specified executable instructions. It should also be noted that, in some alternative implementations, the functions noted in the block may occur out of the order noted in the figures. For example, two blocks shown in succession may, in fact, be executed substantially concurrently, or they may sometimes be executed in the reverse order, depending upon the functionality involved. It should also be noted that each block of the block diagrams and/or flowchart illustrations, and combinations of blocks in the block diagrams and/or flowchart illustrations, can be implemented by a dedicated hardware-based system that performs the specified functions or operations, or may be implemented by a combination of dedicated hardware and computer instructions.

The units involved in the embodiments described in the present disclosure may be implemented by software or by hardware. The name of the unit/module does not constitute a limitation of the unit itself under certain circumstances.

The functions described herein may be performed at least in part by one or more hardware logic components. For example, without limitation, exemplary types of hardware logic components that may be used can include field programmable gate array (FPGA), application specific integrated circuit (ASIC), application specific standard product (ASSP), system on chip (SOC), complex programmable logical device (CPLD) and so on.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, electronic, magnetic, optical, electromagnetic, infrared, or semiconductor systems, apparatus, or devices, or any suitable combination of the foregoing. More specific examples of machine-readable storage media would include one or more wire-based electrical connections, portable computer disks, hard disks, random access memory (RAM), read only memory (ROM), erasable programmable read only memory (EPROM or flash memory), fiber optics, compact disk read only memory (CD-ROM), optical storage devices, magnetic storage devices, or any suitable combination of the foregoing.

It should be noted that each embodiment in this specification is described in a progressive manner, each embodiment focuses on the differences from other embodiments, and the same and similar parts of each embodiment can be referred to each other. As for the system or device disclosed in the embodiment, since it corresponds to the method disclosed in the embodiment, the description is relatively simple and can be referred to the description of the method part for relevant details.

It should be understood that in the present disclosure, the term "at least one" refers to a quantity equal to one or more, and the term "multiple" refers to a quantity equal to two or more. The term "and/or" are used to describe an association relationship between objects, and indicates three possible relationships. For example, "A and/or B" may indicate a case that there is only A, a case that there is only B, and a case that there are both A and B. In each case, a quantity of A may be one or more, and a quantity of B may be one or more. The symbol "/" generally indicates that a former object and a latter object are associated by an "or" relationship. The term "at least one of" or a similar expression refers to "any combination of", including any combination consisting of a single item or multiple items. For example, a statement "at least one of a, b, or c" may indicate a case of "only a", a case of "only b", a case of "only c", a case of "a and b", a case of "a and c", a case of "b and c", or a case of "both a, b and c", where a, b, and c may be single or multiple.

It should also be noted that, in this disclosure, relational terms such as first and second and the like are only used to distinguish one entity or operation from another entity or operation, and do not necessarily require or imply that there are actual relationship or order between these entities or operations. Furthermore, the term "comprise(s)", "include(s)" or any other variation thereof is intended to cover a non-exclusive inclusion such that a process, method, article or apparatus including a set of elements can include not only those elements, but also include other elements not expressly listed, or also include elements inherent in such a process, method, article, or device. Without further limitations, an element defined by the phrase "comprising/including a..., comprise(s)/include(s) a..." does not exclude the presence of additional identical elements in the process, method, article, or apparatus including said element.

The steps of the methods or algorithms described in connection with the embodiments disclosed herein may be directly implemented by hardware, software modules executed by a processor, or a combination of both. Software modules can be placed in random access memory (RAM), internal memory, read-only memory (ROM), electrically programmable ROM, electrically erasable programmable ROM, registers, hard disk, removable disk, CD-ROM, or storage medium in any other manners known in the technical field.

The above description of the disclosed embodiments is provided to enable any the skilled in the art to make or use the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments shown herein, rather, is to be accorded the widest scope consistent with the principles and novel features disclosed herein.

## Claims

1. A method for displaying interaction, wherein the method is applied to an interaction terminal, and the method comprises:
displaying a live stream interaction display page to a target user, wherein the live stream interaction display page comprises at least one first interaction state adjustment control; and
in response to a trigger operation of the target user for a target control in the at least one first interaction state adjustment control, adjusting an interaction state of the target user on the live stream interaction display page.

2. The method according to claim 1, wherein the at least one first interaction state adjustment control comprises at least one of a first audio control and a first video control.

3. The method according to claim 1, wherein the target control is a first audio control;
the adjusting the interaction state of the target user on the live stream interaction display page, comprises:
adjusting the first audio control from a first audio state to a second audio state on the live stream interaction display page, wherein the first audio state is an audio enabled state, and the second audio state is an audio disabled state; or the second audio state is the audio enabled state, and the first audio state is the audio disabled state.

4. The method according to claim 1, wherein the target control is a first video control;
the adjusting the interaction state of the target user on the live stream interaction display page, comprises:
adjusting the first video control from a first usage state to a second usage state on the live stream interaction display page, wherein the first usage state is a video enabled state, and the second usage state is a video disabled state; or the second usage state is the video enabled state, and the first usage state is the video disabled state.

5. The method according to claim 1, wherein the live stream interaction display page comprises a second interaction state adjustment control;
the method further comprises:
in response to a trigger operation of the target user for the second interaction state adjustment control, displaying an interaction state management page to the target user;
receiving a configuration operation of the target user for at least one to-be-adjusted interaction state; and
in response to an interaction state adjustment request triggered by the target user on the interaction state management page, adjusting the interaction state of the target user on the live stream interaction display page according to the configuration operation.

6. The method according to claim 5, wherein the interaction state management page comprises at least one of a second audio control, a second video control, a third video control, an image processing control, and an effect configuration control.

7. The method according to claim 5, wherein the interaction state management page comprises at least one to-be-used control; the at least one to-be-used control is used to control the at least one to-be-adjusted interaction state;
the receiving the configuration operation of the target user for the at least one to-be-adjusted interaction state, comprises:
receiving a trigger operation of the target user for the at least one to-be-used control;
the method further comprises:
in response to the trigger operation of the target user for the at least one to-be-used control, adjusting state description information of the at least one to-be-used control on the interaction state management page.

8. The method according to claim 5, wherein the method further comprises:
in response to the trigger operation of the target user for the second interaction state adjustment control, controlling both an audio state and a video state of the target user to be in a disabled state.

9. The method according to claim 1, wherein the method further comprises:
in response to a request of ending interaction, stopping displaying the at least one first interaction state adjustment control on the live stream interaction display page.

10. The method according to claim 9, wherein the method further comprises:
in response to the request of ending interaction, adjusting a display state of a commenting control on the live stream interaction display page.

11. The method according to claim 10, wherein the stopping displaying the at least one first interaction state adjustment control on the live stream interaction display page, comprises:
deleting at least one first interaction state adjustment control from the live stream interaction display page according to a predetermined first dynamic effect pattern; and/or
the adjusting the display state of the commenting control, comprises:
adjusting a control display state of the commenting control from an icon display state to a text box display state on the live stream interaction display page according to a predetermined second dynamic effect pattern.

12. The method according to claim 1, wherein the live stream interaction display page further comprises an interaction state display interface of the target user;
the method further comprises:
in response to a trigger operation of the target user for the interaction state display interface, displaying an interaction state management page to the target user;
receiving a configuration operation of the target user for at least one to-be-adjusted interaction state; and
in response to an interaction state adjustment request triggered by the target user on the interaction state management page, adjusting the interaction state of the target user on the live stream interaction display page according to the configuration operation.

13. The method according to any one of claims 1-12, wherein the at least one first interaction state adjustment control is displayed in a predetermined area of the live stream interaction display page in a predetermined order.

14. An apparatus for displaying interaction, comprising:
a display unit, configured to display a live stream interaction display page to a target user; where the live stream interaction display page comprises at least one first interaction state adjustment control; and
an adjustment unit, configured to adjust the interaction state of the target user on the live stream interaction display page in response to a trigger operation of the target user for a target control in the at least one first interaction state adjustment control.

15. An electronic device, wherein the electronic device comprises a processor and a memory;
the memory is configured to store instructions or computer programs; and
the processor is configured to execute the instructions or computer programs in the memory to cause the electronic device to implement the method according to any one of claims 1 to 13.

16. A non-transitory computer readable medium having instructions or computer programs stored thereon, wherein the instructions or computer programs, when being executed on a device, cause the device to implement the method according to any one of claims 1 to 13.

17. A computer program product comprising a computer program carried on a non-transitory computer readable medium, the computer program containing program codes for executing the method according to any one of claims 1 to 13.
